# EUROPÄISCHE PATENTSCHRIFT

(11) **EP 0 518 056 B1**
(45) Veröffentlichungstag und Bekanntmachung des Hinweises auf die Patenterteilung: **04.01.1995**
(21) Anmeldenummer: 92107859.8
(22) Anmeldetag: 11.05.1992
(51) Int. Cl.: B60G 17/08

(54) **Verfahren zur frequenzabhängigen adaptiven Regelung eines Fahrwerks**
Method for frequency-dependent, adaptive control of an undercarriage
Procédé pour le réglage auto-ajustable, dépendant de la fréquence d'un mécanisme de roulement

(30) Priorität: 12.06.1991 DE 4119323
(43) Veröffentlichungstag der Anmeldung: 16.12.1992
(73) Patentinhaber: AUGUST BILSTEIN GMBH & CO. KG, 58240 Ennepetal (DE)
(72) Erfinder: Huang, Zhen, Dr.-Ing., W-5830 Schwelm (DE)

(56) Entgegenhaltungen:
- DE-A- 3 705 508
- DE-A- 3 738 284
- DE-A- 3 818 179
- DE-A- 4 015 221
- DE-A- 4 015 972
- DE-C- 3 518 503
- US-A- 4 909 535

## Beschreibung

Die Erfindung betrifft ein Verfahren zur frequenzabhängigen adaptiven Regelung eines Fahrwerks von Kraftfahrzeugen mit regelbaren Schwingungsdämpfern, welche steuerbare Ventile zum Ändern der Dämpfungscharakteristik in einer Mehrzahl von Abstufungen aufweisen.

Der Aufbau eines Fahrwerks läßt sich anhand eines Zweimassenschwingers erläutern, wobei die ungefederte Masse von Rad und Radaufhängung als Radmasse und die anteilige Aufbaumasse des Fahrzeuges als Aufbaumasse bezeichnet ist. Zwischen beiden befindet sich ein Dämpfer-Federsystem. Von einem solchen Radfederungssystem werden zwei sich widersprechende Aufgaben gelöst. Durch die Fortbewegung eines Fahrzeuges auf einer im gewissen Grad unvermeidbar unebenen Straße kommt es über die Räder zu einer Schwingungsanregung. Die resultierenden Rad- und Aufbauschwingungen beeinträchtigen den Fahrkomfort und auch die Sicherheit des Fahrzeuges.

Damit hat also das Feder- Dämpfersystem einmal die Aufgabe, das Rad so genau wie möglich an der Fahrbahn entlang zu führen, die Kraftübertragung vom Rad zum Untergrund auf möglichst hohem Niveau zu halten, und andererseits die aus den Straßenunebenheiten resultierenden Aufbaubewegungen auszugleichen, um den Fahrkomfort für die Insassen zu steigern. Durch Einstellung der Dämpferkraft des Schwingungsdämpfers in Abhängigkeit der Straßenanregung können im hohen Maße die auftretenden Schwingungen absorbiert und die Fahrsicherheit gewährleistet werden.

Ein Verfahren zur Steuerung der Dämpfungskraft eines Schwingungsdämpfers ist aus der deutschen Patentschrift DE PS 37 05 508 bekannt. Das beschriebene Verfahren verwendet zur Regelung der Dämpfungskraft den Absolutwert der Aufbaubeschleunigung, wobei dieser mit zwei Grenzwerten zur Umschaltung auf eine härtere Dämpfungskennlinie in einer definierten Zeit verglichen wird. Nachteilig wirkt sich bei diesem Verfahren aus, daß es nur bei einem Schwingungsdämpfer mit einem Drei-Wege-Ventil zum Einsatz kommen kann und nicht im ausreichenden Maße die Abhängigkeit der einzustellenden Dämpfungskraft von den frequenten Straßenunebenheiten berücksichtigt. In der deutschen Patentanmeldung DE-A-4 138 171 wird ein Verfahren zum Regeln eines semiaktiven Fahrwerks beschrieben, bei dem zwischen einmaligen, lang- und kurzwelligen Straßenanregungen zur Einstellung der Dämpfungskraft unterschieden wird, wobei neben der Aufbaubeschleunigung des Fahrzeuges auch die Relativgeschwindigkeit zwischen Aufbau- und Achse gemessen werden muß und nur zwei Dämpfungskrafteinstellungen möglich sind.

Der Erfindung liegt die Aufgabe zugrunde, ein Verfahren zur frequenzabhängigen adaptiven Regelung eines Fahrwerks zu schaffen, mit dem die Dämpfungskraft eines Schwingungsdämpfers in Abhängigkeit der Fahrbedingungen des Kraftfahrzeuges und der frequenten Straßenunebenheiten in mehreren Stufen eingestellt werden kann, ohne die Ralativgeschwindigkeit zwischen Aufbau- und Achse zu messen, und mit dem neben einer hohen Fahrsicherheit ein optimaler Komfort erreicht wird.

Die Aufgabe wird durch die Merkmale des ersten Patentanspruchs gelöst. Vorteilhafte Ausführungen sind in den Unteransprüchen beschrieben.

Bei dem erfindungsgemäßen Verfahren zur frequenzabhängigen adaptiven Regelung der Dämpfungskraft eines Schwingungsdämpfers wird in Abhängigkeit der Fahrzeuggeschwindigkeit eine Grunddämpfungscharakteristik eingestellt, wobei eine Fahrgeschwindigkeitserhöhung eine härtere Dämpfung und eine Senkung der Fahrgeschwindigkeit eine weichere Grunddämpfungscharakteristik bewirkt. Die so eingestellte Grunddämpfungscharakteristik wird bei langwelligen Straßenunebenheiten auf eine härtere Kennung geschaltet, wobei eine langwellige periodische Straßenanregung vorliegt, wenn sich das Vorzeichen der Aufbaubeschleunigung in einer eine langwellige Anregung definierenden Periodenzeit nicht ändert. Um den Einfluß von Fehlererkennungen durch hochfrequente Oberwellen, insbesondere in der Nähe des Nulldurchgangs der Aufbaubeschleunigung, zu vermeiden, bleibt die Dämpfungskraft nach dem Erkennen einer langwelligen Straßenanregung während einer Verzögerungszeit nach dem erstamligen Vorzeichenwechsel der Aufbaubeschleunigung in der harten Kennung, d. h. ein Vorzeichenwechsel während der Verzögerungszeit wird nicht berücksichtigt.

Bei einer kurzwelligen Straßenunebenheit bleibt die Grunddämpfungscharakteristik eingestellt. Eine kurzwellige Straßenanregung wird erkannt, wenn sich das Vorzeichen der Aufbaubeschleunigung (aₐ) in der Periodenzeit ändert.

Dieses Regelverfahren benötigt außer den am Fahrzeug schon vorhandenen Sensoren für die Fahrgeschwindigkeit und die Hilfsregelgrößen nur einen Sensor für das Vorzeichen der Aufbaubeschleunigung und kann bei Einsatz eines mehrstufigen Steuerventils die Dämpfungskraft des Schwingungsdämpfers sehr feinstufig einstellen. Es ist jedoch auch für Schwingungsdämpfer mit Zwei- oder Drei-Wege-Ventilen einsetzbar.

Eine sehr kostengünstige Variante besteht darin, nur die Fahrzeugvorderachse mit Sensoren für die Aufbaubeschleunigung auszurüsten und die entsprechenden Signale für die Hinterachse aus den Signalen der Vorderachse abzuleiten.

Die optimale Dämpfungskraft für eine notwendige Fahrsicherheit und im Kompromiß dazu für einen guten Fahrkomfort wird außer von der momentanen Fahrgeschwindigkeit und der momentanen frequenten Straßenanregung, auch von Größen wie Lenkwinkel, Bremsnicken und Querbeschleunigung beeinflußt, die als Hilfsgrößen in den Regelkreis eingehen können.

Das erfindungsgemäße Regelverfahren, daß aus einer Kombination von adaptiver und frequenzabhängiger Dämpfungskrafteinstellung besteht, weist insbesondere den Vorteil auf, daß es durch die Kombination beider Dämpfungskrafteinstellungen die Vorteile beider Verfahren zur Erreichung einer hohen Fahrsicherheit bei größtmöglichem Fahrkomfort nutzt.

Die Erfindung soll anhand eines Ausführungsbeispiels näher erläutert werden. Die zugehörigen Zeichnungen zeigen:
- Fig. 1: die Ausführung eines Fahrwerks eines Kraftfahrzeuges mit vier Stoßdämpfern,
- Fig. 2: das Blockschaltbild der Fahrwerksregelung,
- Fig. 3: den Signalverlauf der Dämpfungskraft in Abhängigkeit der Fahrgeschwindigkeit mit überlagertem frequenzabhängigen Teil der Dämpfungskraft,
- Fig. 4: den Signalverlauf der Aufbaubeschleunigung und des frequenzabhängigen Teils der Dämpfungskraft bei einer langwelligen periodischen Straßenanregung,
- Fig. 5: den Signalverlauf der Aufbaubeschleunigung und des frequenzabhängigen Teils der Dämpfungskraft bei einer kurzwelligen periodischen Straßenanregung,
- Fig. 6: den Signalverlauf der Aufbaubeschleunigung und des frequenzabhängigen Teils der Dämpfungskraft bei langwelliger Erregung durch ein Einzelhindernis und
- Fig. 7: den Signalverlauf der Aufbaubeschleunigung und des frequenzabhängigen Teils der Dämpfungskraft bei kurzwelliger Erregung durch ein Einzelhindernis.

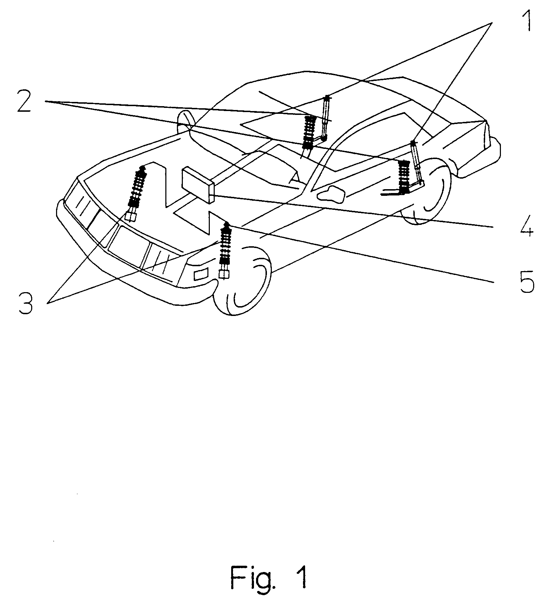

Fig. 1 zeigt die Ausführung eines Fahrwerks für ein Kraftfahrzeug mit vier Stoßdämpfern. Die hintere Achse wird über zwei Schwingungsdämpfer 1 und zwei Wendelfedern 2 abgestützt, die vordere Radaufhängung weist sogenannte niveaugeregelte Federbeine 3 auf. Die Schwingungsdämpfer 1 und die Federbeine 3 dämpfen die Relativbewegungen der ungefederten Massen des Rades und der Radaufhängung und den gefederten anteiligen Aufbaumassen des Fahrzeuges. Zum Verändern der Dämpfereigenschaften ist eine Regeleinrichtung 4 vorgesehen, die zum Beispiel einen Teil des Fahrzeugrechners darstellen kann. Die Regeleinrichtung 4 errechnet aus den Signalen der Beschleunigungssensoren 5 und der Fahrgeschwindigkeit des Fahrzeuges eine Stellgröße zur Veränderung der Dämpfungskraft, wobei für jeden Schwingungsdämpfer 1 und jedes Federbein 3 ein Beschleunigungssensor 5 vorhanden ist.

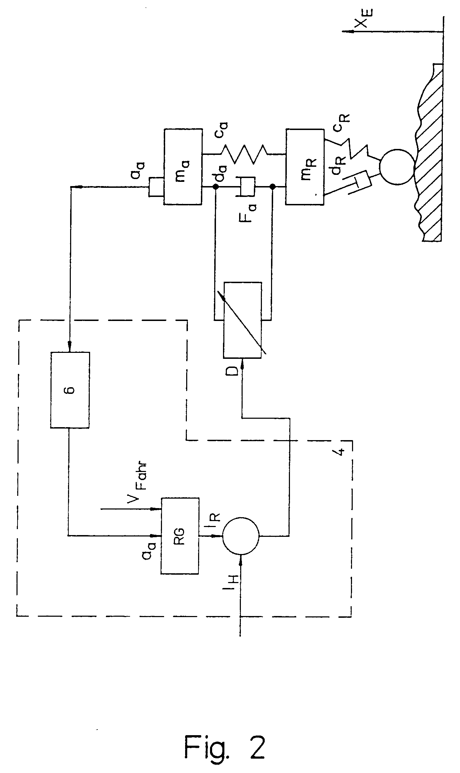

Zur Erläuterung des Regelverfahrens wird das in Fig. 2 gezeigte Blockschaltbild des Einradmodells verwendet. Das lineare Zweimassensystem besteht aus der gefederten anteiligen Aufbaumasse mₐ und der ungefederten Radmasse m_{R}. Zwischen beiden Massen befindet sich ein Dämpfer-Feder-System, bei dem cₐ die Federkonstante und dₐ die Dämpfungskonstante darstellen. Die Federkonstande c_{R} und die Dämpfungskonstante d_{R} sind die Konstanten des radimanenten Dämpfer-Feder-Systems. Die Fahrgeschwindigkeit v_{Fahr} wird vom Tachometer des Fahrzeuges abgegriffen und dem Regler RG direkt zugeleitet. Dieser bildet über die Größe der Fahrgeschwindigkeit v_{Fahr} den Stellgrößenanteil für die momentane Grunddämpfungscharakteristik.

Der an der Aufbaumasse mₐ angeordnete Beschleunigungssensor 5 mißt die Aufbaubeschleunigung aₐ, die an einen Filter 6 weitergeleitet wird. In diesem Filter werden aufkommende Störgrößen herausgefiltert. Das gefilterte Signal geht als Eingangsgröße an den Regler RG. Der Regler errechnet gemäß dem erfindungsgemäßen Regelalgorithmus eine Reglerausgangsgröße I_{R} zur Beeinflussung des Dämpfungsverhaltens des Schwingungsdämpfers, indem dem Teil der Stellgröße für die Grunddämpfungskennlinie der Stellgrößenanteil der frequenzabhängigen Dämpfungskraft überlagert wird.

Die Reglerausgangsgröße I_{R} bildet zusammen mit dem Stellgrößenanteil I_{H} der Hilfsregelgrößen, wie Lenkwinkel oder Querbeschleunigung, die Stellgröße I zur Beeinflussung der Dämpfungskraft F_{D} des Schwingungsdämpfers, wobei auch denkbar ist, die gemessenen Hilfsregelgrößen direkt als Eingangsgrößen dem Regler RG zuzuführen.

Diese Art von Regelung kann insbesondere für Schwingungsdämpfer mit einem regelbaren Mehrwegeventil als Bypaßventil zur Anwendung kommen.

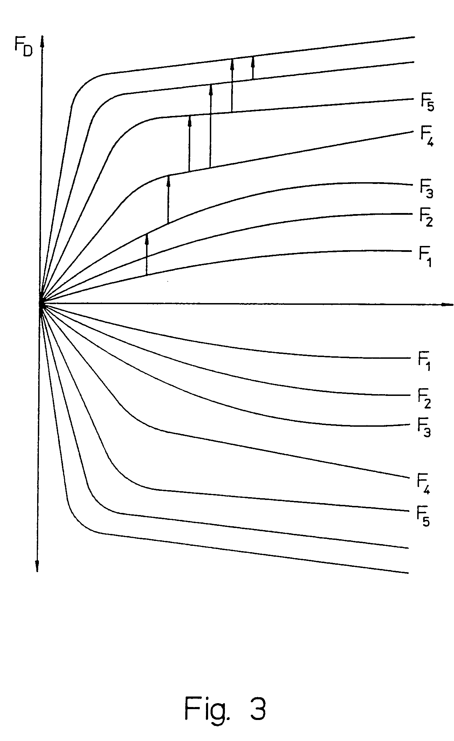

Anhand des in Fig. 3 gezeigten Signalverlaufs der Dämpfungskraft soll der Regelalgorithmus näher erläutert werden.

Fährt zum Beispiel das Fahrzeug mit einer sehr geringen Geschwindigkeit V_{Fahr}, wird die Grunddämpfungskraft auf die Dämpfungskennlinie F₁ - weich - eingestellt. Wird nun zusätzlich eine kurzwellige Straßenanregung sensiert, bleibt die Dämpfungskraft F_{D} in der weichen Kennlinie. Bei einer langwelligen Straßenanregung erzeugt der Regler eine Stellgröße zur Einstellung einer härteren Dämpfungscharakteristik F₂. Bei einer höheren Fahrgeschwindigkeit v_{Fahr} wird die Grunddämpfungskraft auf eine entsprechend höhere, beispielsweise die Dämpfungskraftkennlinie F₃, eingestellt. Der frequenzabhängige Teil der Regelung stellt jetzt bei einer langwelligen Straßenanregung die Dämpfungskraft F_{D} auf die härtere Kennlinie F₄, bei einer kurzwelligen Straßenanregung verbleibt sie in der eingestellten Grunddämpfungskraftkennlinie F₃.

Fährt das Fahrzeug mit einer Fahrgeschwindigkeit, die eine Grunddämpfung F_{D} zwischen zwei möglichen Dämpfungskennlinien, zum Beispiel zwischen den Dämpfungskennlinien F₂ und F₃ bedingt, wird der Regler eine Stellgröße in Abhängigkeit einer langwelligen Straßenanregung erzeugen, die die Dämpfungskraft zwei Stufen härter einstellt, zum Beispiel auf F₄.

Einen ähnlichen Einfluß auf die Dämpfungskraft können die Hilfsregelgrößen, wie Querbeschleunigung, Bremsnicken oder Lenkwinkel ausüben.

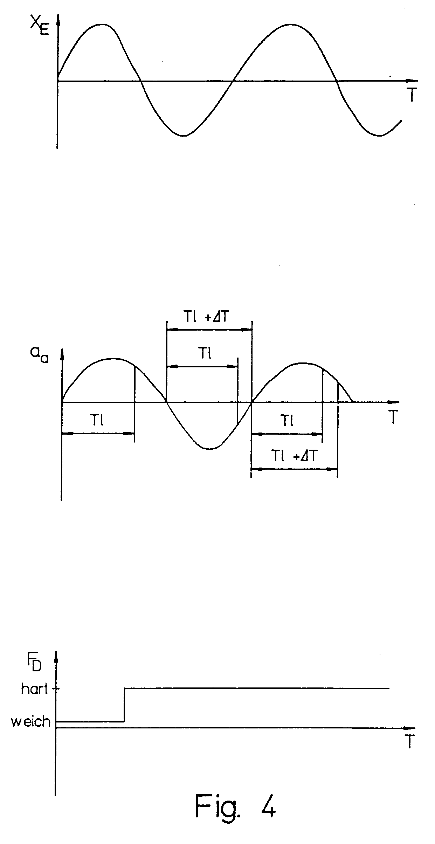

Die Fig. 4 bis 7 zeigen die Signalverläufe der Aufbaubeschleunigung aₐ und des frequenzabhängigen Teils der Dämpfungskraft F_{D} in Abhängigkeit unterschiedlicher Straßenanregungen.

Bei einer periodischen langwelligen Straßenanregung, wie sie Fig. 4 darstellt, liefert der Regler RG eine Stellgröße zur Umschaltung der über die Fahrgeschwindigkeit eingestellten Grunddämpfung auf eine härtere Dämfpungskennlinie. Der Regler erkennt eine langwellige Erregung, da sich das Vorzeichen der Aufbaubeschleunigung aₐ während einer definierten Zeit T_{L} nicht ändert.

Hat der Regler eine langwellige Erregung erkannt, wird in den nachfolgenden Berechnungen der Zeit T_{L} zur Ausschaltung von Fehlerkennungen durch auftretende Störgrößen eine Verzögerungszeit T zuaddiert, die in bestimmten Fällen auch negative Werte annehmen kann. Eine andere, nicht dargestellte Möglichkeit, Fehler durch hochfrequente Oberwellen, insbesondere in der Nähe des Nulldurchgangs der Aufbaubeschleunigung aₐ zu vermeiden, besteht darin, nach dem erstmaligen Erkennen der langwelligen Erregung den erstmaligen Vorzeichenwechsel der Aufbaubeschleunigung aₐ während einer Verzögerungszeit T nicht zu berücksichtigen.

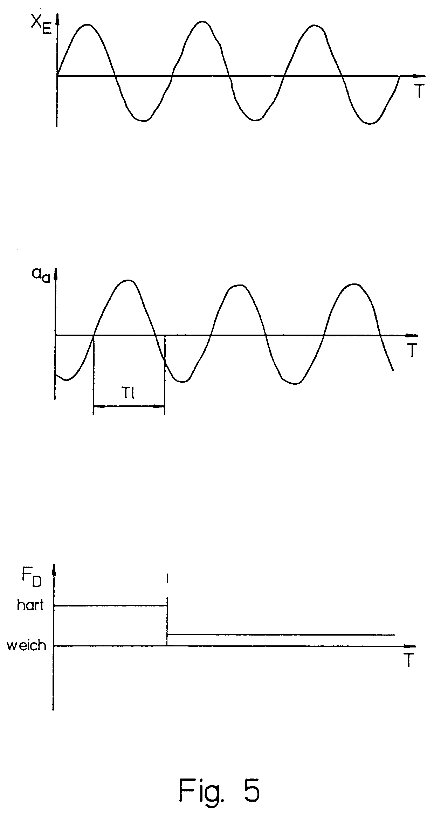

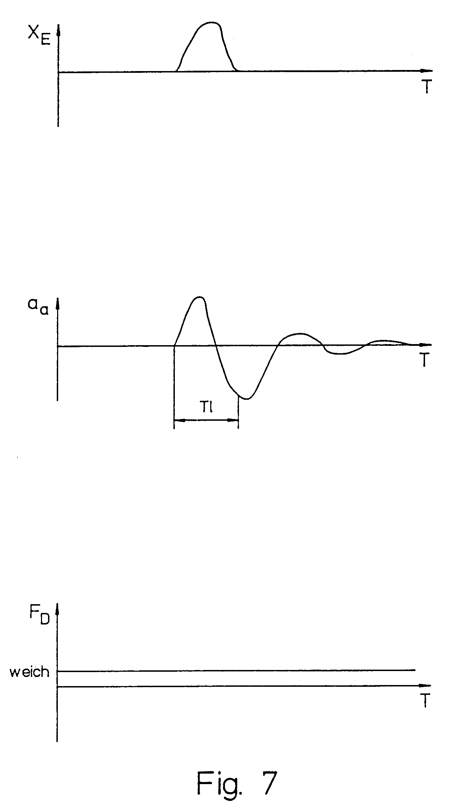

Erkennt der Regler RG eine periodische kurzwellige Straßenanregung x_{E} (Fig. 5 und 7), das heißt das Vorzeichen der Aufbaubeschleunigung aₐ ändert sich in der vordefinierten Zeit T_{L}, wird eine Stellgröße zum Verbleib der Dämpfungskraft F_{D} in der weichen Grunddämpfungskennlinie erzeugt, wie in Fig. 5 dargestellt. Bei einer einmaligen Straßenanregung x_{E}, die eine kurzwellige Aufbaubeschleunigung aₐ verursacht, verbleibt die Dämpfungskraft F_{D} ebenfalls in der weichen Kennlinie (Fig. 7).

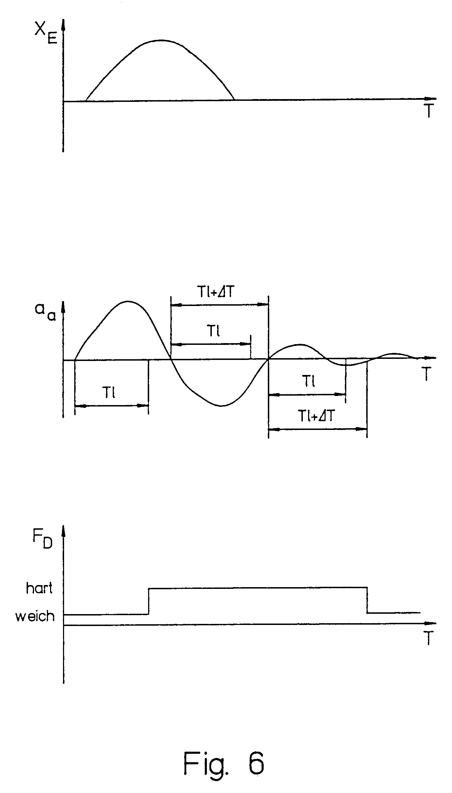

Fig. 6 zeigt die Signalverläufe bei einem Einzelhindernis mit langwelliger Anregung x_{E}. Der Regler RG erkennt die langwellige Straßenanregung, da sich das Vorzeichen der Aufbaubeschleunigung aₐ in der vordefinierten Zeit T_{L} nicht ändert und schaltet von der durch die Fahrgeschwindigkeit eingestellten Grunddämpfungskraftkennlinie auf eine härtere Kennlinie um. Die Schwingung der Aufbaubeschleunigung klingt nach der einmaligen straßenanregung x_{E} langsam ab, die Aufbaubeschleunigung ändert ihr Vorzeichen in der Zeit T_{L} und der Regler erzeugt eine Stellgröße I, die die Dämpfungskraft F_{D} des Schwingungsdämpfers auf die Grunddämpfungskennlinie einstellt.

### Bezugszeichen

- 1: Schwingungsdämpfer
- 2: Wendelfeder
- 3: Federbein
- 4: Regeleinrichtung
- 5: Beschleunigungssensor
- 6: Filter
- mₐ: Aufbaumasse
- m_{R}: Radmasse
- cₐ: Federkonstante
- dₐ: Dämpfungskonstante
- c_{R}: Federkonstante
- d_{R}: Dämpfungskonstante
- v_{Fahr}: Fahrgeschwindigkeit
- RG: Regler
- I_{R}: Reglerausgangsgröße
- I_{H}: Stellgrößenanteil der Hilfregelgrößen
- I: Stellgröße
- F_{D}: Dämpfungskraft
- F₁ - F₅: Dämpfungskennlinien
- T: Verzögerungszeit
- T_{L}: definierte Zeit
- x_{E}: Straßenanregung

## Patentansprüche

1. Verfahren zur frequenzabhängigen adaptiven Regelung eines Fahrwerks mit regelbaren Schwingungsdämpfern, welche steuerbare Ventile zum Ändern der Dämpfungscharakteristik in einer Mehrzahl von Abstufungen aufweisen, bei dem die Fahrzeuggeschwindigkeit und die Aufbaubeschleunigung gemessen werden, dadurch gekennzeichnet, daß die Grunddämpfungscharakteristik in Abhängigkeit der Fahrzeuggeschwindigkeit (v_{Fahr}) eingestellt wird, wobei eine Fahrgeschwindigkeitserhöhung eine härtere Grunddämpfungscharakteristik und eine Fahrgeschwindigkeitssenkung eine weichere Grunddämpfungscharakteristik bewirkt, daß die Dämpfungscharakteristik auf eine härtere Kennung geschaltet wird oder bei härtester Grunddämpfungscharakteristik in dieser bleibt, wenn das Vorzeichen der Aufbaubeschleunigung (aₐ) sich in einer eine langwellige straßenanregung kennzeichnenden Periodenzeit (T_{L}) nicht ändert und die Dämpfungscharakteristik in die Kennlinie der von der Fahrzeuggeschwindigkeit (v_{Fahr}) eingestellten Grunddämpfung eingestellt wird oder bleibt, wenn sich das Vorzeichen der Aufbaubeschleunigung (aₐ) in der Periodenzeit (T_{L}) ändert.

2. Verfahren nach Anspruch 1, dadurch gekennzeichnet, daß die Umschaltung der Dämpfungscharakteristik auf eine härtere oder weichere Kennung in ein oder mehreren Stufen außderdem von Hilfsregelgrößen abhängt.

3. Verfahren nach Anspruch 1 und/oder 2, dadurch gekennzeichnet, daß die Querbeschleunigung, der Lenkwinkel, die Niveauregelung und/oder ein Signal für die Bremsbetätigung als Hilfsgrößen in den Regelkreis eingehen.

4. Verfahren nach einem oder mehreren der Ansprüche 1 bis 3, dadurch gekennzeichnet, daß nach einer erstmaligen Erkennung einer langwelligen Straßenanregung der Periodenzeit (T_{L}) ein Verzögerungswert (ΔT) zuaddiert wird und die Erkennung der langen Welle mit der Periodenzeit (T_{L} + ΔT) erfolgt.

5. Verfahren nach einem oder mehreren der Ansprüche 1 bis 4, dadurch gekennzeichnet, daß die Periodenzeit (T_{L}) und/oder die Periodenzeit (T_{L} + ΔT) als Konstanten im Regler abgespeichert sind.

6. Verfahren nach einem der Ansprüche 1 bis 3, dadurch gekennzeichnet, daß nach der Erkennung einer langwelligen periodischen Straßenanregung (x_{E}) die Dämpfungskraft (D) in einer Verzögerungszeit (ΔT) nach dem erstmaligen Vorzeichenwechsel der Aufbaubeschleunigung (aₐ) während der eine langwellige Straßenanregung kennzeichnenden Periodenzeit (T_{L}) in der harten Kennung bleibt.

7. Verfahren nach einem der Ansprüche 4 bis 6, dadurch gekennzeichnet, daß die Größe der Verzögerungszeit (ΔT) von der Fahrgeschwindigkeit (v_{Fahr}) des Fahrzeuges abhängig ist.

8. Verfahren nach Anspruch 7, dadurch gekennzeichnet, daß bei einer hohen Fahrgeschwindigkeit (v_{Fahr}) eine längere Verzögerungszeit (ΔT) vorgesehen ist.

9. Verfahren nach einem oder mehreren der Ansprüche 1 bis 5, dadurch gekennzeichnet, daß die Fahrzeugvorderachse mit Sensoren für die Aufbaubeschleunigung und/oder die Querbeschleunigung ausgerüstet ist und die Signale für die Hinterachse aus den Signalen der Vorderachse abgeleitet werden.

10. Verfahren nach einem oder mehreren der Ansprüche 1 bis 6, dadurch gekennzeichnet, daß mindestens eins der steuerbaren Ventile des Schwingungsdämpfers ein Drei-Wege-Ventil ist.

11. Verfahren nach einem oder mehreren der Ansprüche 1 bis 6, dadurch gekennzeichnet, daß mindestens eins der steuerbaren Ventile des Schwingungsdämpfers ein Zwei-Wege-Ventile ist.

## Claims

1. A process for the frequency-dependent adaptive control of running gear with adjustable oscillation dampers which comprise controllable valves to change the damping characteristic in a plurality of steps, in which process the motor vehicle velocity and the vehicle body acceleration are measured, characterised in that the basic damping characteristic is adjusted in dependence upon the motor vehicle velocity (V_{Fahr}), wherein an increase in velocity causes a harder basic damping characteristic and a decrease in motor vehicle velocity causes a softer basic damping characteristic, that the damping characteristic is switched to a harder characteristic or in the case of the hardest basic damping characteristic remains in this when the sign indicating that the vehicle body is accelerating (aₐ) does not change in a periodic time (T_{L}) characterising long wave road excitation, and the damping characteristic in the characteristic line of the basic damping, which is adjusted by the motor vehicle velocity (V_{Fahr}), is adjusted or remains when the sign indicating the vehicle body acceleration (aₐ) changes in the periodic time (T_{L}).

2. A process according to claim 1, characterised in that the switching of the damping characteristic to a harder or a softer characteristic in one or a plurality of steps is also dependent upon objective variables.

3. A process according to claim 1 and/or 2, characterised in that the transverse acceleration, the steering angle, the level control and/or a signal for brake actuation enter the control circuit as objective variables.

4. A process according to one or more of claims 1 to 3, characterised in that, after a first detection of long wave road excitation, a deceleration value (ΔT) is added to the periodic time (T_{L}) and the detection of long waves with the periodic time (T_{L} + ΔT) results.

5. A process according to one or more of claims 1 to 4, characterised in that the periodic time (T_{L}) and/or the periodic time (TL + ΔT) are stored as constants in the controller.

6. A process according to one of claims 1 to 3, characterised in that, after the detection of long wave periodic road excitation (x_{E}), the damping force (D) in a deceleration time (ΔT) after the first exchange of signs indicating the vehicle body acceleration (aₐ) during the periodic time (T_{L}) characterising long wave road excitation remains in the hard characteristic.

7. A process according to one of claims 4 to 6, characterised in that the variable is dependent upon the deceleration time (ΔT) of the motor vehicle velocity (v_{Fahr}).

8. A process according to claim 7, characterised in that at a high motor vehicle velocity (v_{Fahr}) a longer deceleration time (ΔT) is provided.

9. A process according to one or more of claims 1 to 5, characterised in that the vehicle front axle is provided with sensors for the vehicle body acceleration and/or the transverse acceleration and the signals for the rear axle are derived from the signals of the front axle.

10. A process according to one or more of claims 1 to 6, characterised in that at least one of the controllable valves of the oscillation damper is a three way valve.

11. A process according to one or more of claims 1 to 6, characterised in that at least one of the controllable valves of the oscillation damper is a two way valve.

## Revendications

1. Procédé de régulation auto-ajustable, en fonction de la fréquence, d'un train de roulement comportant des amortisseurs de vibrations ajustables qui présentent des vannes pilotées pour modifier la caractéristique d'amortissement en plusieurs pas, dans lequel la vitesse du véhicule et l'accélération de la carrosserie sont mesurées, caractérisé en ce que la caractéristique fondamentale d'amortissement est ajustée en fonction de la vitesse du véhicule (v_{véh}), une augmentation de la vitesse du véhicule ayant pour effet une caractéristique fondamentale d'amortissement plus dure, et une diminution de la vitesse du véhicule pour effet une caractéristique fondamentale d'amortissement plus molle, en ce que la caractéristique d'amortissement est commutée sur une caractéristique plus dure ou reste dans la caractéristique fondamentale d'amortissement la plus dure lorsqu'elle se trouve dans celle-ci, lorsque le signe de l'accélération de la carrosserie (aₐ) ne se modifie pas au cours d une période (T_{L}) caractérisant une excitation de grande longueur d'onde par la chaussée, et la caractéristique d'amortissement est réglée ou reste dans la courbe caractéristique de l'amortissement fondamental instaurée par la vitesse du véhicule (v_{véh}), lorsque le signe de l'accélération de la carrosserie (a_{c}) se modifie pendant la période (T_{L}).

2. Procédé selon la revendication 1, caractérisé en ce que la commutation de la caractéristique d'amortissement sur une caractéristique plus dure ou plus molle, en un ou plusieurs pas, dépend en outre de grandeurs auxiliaires de régulation.

3. Procédé selon la revendication 1 et/ou 2, caractérisé en ce que l'accélération transversale, l'angle de virage, la régulation de l'assiette et/ou un signal d'actionnement des freins sont introduits comme grandeurs auxiliaires dans la boucle de régulation.

4. Procédé selon l'un ou plusieurs des revendications 1 à 3, caractérisé en ce qu'après une première reconnaissance d'une excitation à grande longueur d'onde par la chaussée, une valeur de temporisation (ΔT) est ajoutée à la période (T_{L}), et la reconnaissance de la grande longueur d'onde s'effectue avec une période (T_{L} + ΔT).

5. Procédé selon l'une ou plusieurs des revendications 1 à 4, caractérisé en ce que la période (T_{L}) et/ou la période (T_{L} + ΔT) sont mises en mémoire dans le régulateur en temps que constantes.

6. Procédé selon l'une des revendications 1 à 3, caractérisé en ce qu'après la reconnaissance d'une excitation périodique de grande longueur d'onde par la chaussée (x_{E}), la force d'amortissement (D) reste dans la caractéristique dure pendant une durée de temporisation (ΔT) après le premier changement du signe de l'accélération de la carrosserie (a_{c}) au cours d une période (T_{L}) caractérisant une excitation de grande longueur d'onde par la chaussée.

7. Procédé selon l'une des revendications 4 à 6, caractérisé en ce que la grandeur de la durée de temporisation (ΔT) dépend de la vitesse (v_{véh}) du véhicule.

8. Procédé selon la revendication 7, caractérisé en ce que, pour une vitesse élevée du véhicule (v_{véh}), il est prévu une durée de temporisation (ΔT) plus longue.

9. Procédé selon l'une ou plusieurs des revendications 1 à 5, caractérisé en ce que l'essieu avant du véhicule est équipé de détecteurs de l'accélération de la carrosserie et/ou de l'accélération transversale, et les signaux pour l'essieu arrière sont dérivés des signaux de l'essieu avant.

10. Procédé selon l'une ou plusieurs des revendications 1 à 6, caractérisé en ce qu'au moins une des vannes pilotées de l'amortisseur de vibrations est une vanne à trois voies.

11. Procédé selon l'une ou plusieurs des revendications 1 à 6, caractérisé en ce qu'au moins une des vannes pilotées de l'amortisseur de vibrations est une vanne à deux voies.
